# EUROPEAN PATENT APPLICATION

(11) **EP 0 763 417 A1**
(43) Date of publication of application: **19.03.1997**
(21) Application number: 96114620.6
(22) Date of filing: 12.09.1996
(51) Int. Cl.: B29C 67/00, G05B 19/4099

(54) **Method and apparatus for determining thickness values and shapes of laminate layers of product**

(30) Priority: 13.09.1995 JP 235674/95
(71) Applicant: TOYOTA JIDOSHA KABUSHIKI KAISHA, Aichi-ken 471 (JP)
(72) Inventor: Yamada, Noboru, c/o Toyota Jidosha K.K., Toyota-shi, Aichi-ken (JP)
(74) Representative: Tiedtke, Harro, Dipl.-Ing.

(57) **Abstract**

Method and apparatus (10) for conceptually dividing a product (306, 310, 330, 332) into a plurality of constituent layers to fabricate the product by lamination of sheets (324, 204, 226) corresponding to the constituent layers, wherein a thickness and a shape of each constituent layer are determined so as to permit the adjacent constituent layers to have different thickness values. The method and apparatus are suitably used as part of method and apparatus (10, 50) for fabricating the product by lamination and bonding of the sheets.

## Description

### BACKGROUND OF THE INVENTION

### Field of the Invention

The present invention relates generally to techniques for manufacturing a product in the form of an article of manufacture or a model, master pattern or prototype thereof, wherein a plurality of constituent layers are laminated into the product. More particularly, this invention is concerned with such techniques which permit reduction in the required time and cost of manufacture of the laminar product.

### Discussion of the Prior Art

As one form of such technique for manufacturing a product by lamination, there is known a technique wherein sheets of a selected material which correspond to a plurality of constituent layers of the product and which have substantially the same thickness of each constituent layer are laminated or superposed on each other to form the product. The technique includes a process of cutting the sheets to have substantially the same outer contours or shapes as the respective constituent layers, and a process of laminating the sheets on each other. Usually, each sheet is first superposed on another sheet and is then cut to have the appropriate outer contour. However, the sheet may be first cut to have the appropriate outer contour so that the shaped sheet is superposed on another sheet.

Examples of such technique for manufacturing a product by lamination are disclosed in Nikkei Mechanical, March 6, 1995, Nikkei Business Publications, Inc., Tokyo Japan, and JP-A-6-106628. In these examples, paper sheets having a constant thickness are used, and a desired product is conceptually divided into a plurality of constituent layers each of which has the same thickness as the paper sheets. The outer contours of the individual paper sheets corresponding to the constituent layers of the product are determined. The technique includes a process of cutting the paper sheets (by laser or a suitable cutter) to the determined outer contours, and a process of laminating the paper sheets to form the product.

The conventional techniques as described above have an advantage that the techniques are comparatively easily practiced to manufacture a desired product with a comparatively high degree of accuracy, and an advantage that the techniques permit reduction in the cost of manufacture of the products.

However, these prior techniques have some disadvantages described below. That is, the techniques require determination of the outer contours of constituent layers of a product each layer having the same thickness as the paper sheets to be used. Therefore, a portion of the product which has the same cross sectional area or shape over a considerably large distance in the direction of lamination of the constituent layers is divided into a relatively large number of constituent layers, which require the corresponding large number of paper sheets to be cut to have the same outer contour and laminated on each other. This requires repeated cutting and laminating operations, which are considerably time-consuming, undesirably resulting in reduced manufacturing efficiency and increased cost of manufacture of the product.

### SUMMARY OF THE INVENTION

It is therefore a object of the present invention to provide a method of determining the thickness and shape of each constituent layer of a product so as to permit the constituent layers to have different thickness values in the direction of lamination of the constituent layers, which process is effective to reduce the drawback experienced in the prior art.

It is a second object of the invention to provide a method of fabricating a product by lamination of constituent layers, which includes the method of determining the thickness and shape of each constituent layer as described above.

It is a third object of this invention to provide an apparatus suitable for practicing the method of determining the thickness and shape of each constituent layer described above.

It is a fourth object of the invention to provide an apparatus suitable for practicing the method of fabricating a product as described above.

It is a fifth object of the invention to provide an apparatus for preparing a sheet suitable for use in the above method and apparatus for fabricating the product.

The first object indicated above may be achieved according to a first aspect of this invention, which provides a method of conceptually dividing a product into a plurality of constituent layers to fabricate the product by lamination of sheets corresponding to the constituent layers, wherein a thickness and a shape contour of each of the constituent layers are determined so as to permit adjacent ones of the constituent layers to have different thickness values.

In the method according to the first aspect of this invention, there exist no restrictions when the product is conceptually divided into two or more constituent layers. Namely, all the conceptual constituent layers of the product need not have the same thickness, and the adjacent constituent layers superposed on each other in the direction of lamination are permitted to have different thickness values if necessary, so that the thickness values of the constituent layers can be freely determined depending upon the shape or other properties of the product.

According to the present method, therefore, a portion of the product which extends in the direction of lamination and which having the same cross sectional shape in a plane parallel to the direction of lamination need not be divided into a plurality of constituent layers, and can consist of a single constituent layer. Accordingly, the required number of the constituent layers into which the product is conceptually divided is reduced, and the fabrication of the product by lamination of sheets corresponding to the conceptual constituent layers is simplified, resulting in reduced time and cost of the fabrication.

The present method will be further explained to clarify the first aspect of the invention:
(1) The term "product" is interpreted to include the following:
   1. A final or end product;
   2. A model or prototype of an end product;
   3. A master pattern for forming an end product or a model or prototype.

   The master pattern may be a casting pattern used to form a casting mold. The casting pattern may be a permanent pattern which is removed from a sand mold before a mold cavity is filled with a molten material, or alternatively a consumed pattern which remains in a sand mold until it disappears by heat transferred from the molten material. The consumed pattern may be called "full mold pattern".
(2) The term "sheet" is interpreted to mean a solid material in a planar form such as a layer, film or plate, which is selected from among paper material, wood materials, synthetic resins and metals. Where the product is a full mold pattern, the pattern may be fabricated by lamination of sheets formed of a synthetic resin such as a foamed polystyrene resin.
(3) The sheet may consist of a single material or two or more materials, and may be a laminar structure of a paper material or synthetic resin sheets or layers.
(4) The method according to the first aspect of the invention may be practiced such that the determination of the thickness and shape of each constituent layer of the product is effected in an almost fully automated manner by an apparatus with some aid of an operator of the apparatus, or almost manually by the operator.

In one preferred form of the first aspect of this invention, the method comprises a step of determining the thickness values of the constituent layers such that the adjacent constituent layers have different shapes.

In this form of the method, a portion of the product which extends in the direction of lamination and which has the same cross sectional shape in a plane parallel to the direction of lamination is given or constituted by a single constituent layer, and need not be divided into two or more constituent layers.

Therefore, the required number of the constituent layers which conceptually constitute the product is minimized, and the fabrication of the product is further simplified, leading to further reduction in the required time and cost of the fabrication.

The above preferred form of the method of the first aspect of the invention will be further explained.
(1) In this preferred form of the method, the product is conceptually divided into the constituent layers or the thickness values of the constituent layers are determined, according to a rule that the adjacent constituent layers have different shapes, whereby the product is conceptually divided into the constituent layers "so as to permit the adjacent constituent layers to have different thickness values". If this rule is followed to conceptually divide the product into the constituent layers under any condition, the constituent layers may include a considerably thick layer, which may cause a problem in subsequent fabrication of the product by lamination of the constituent layers. In view of this, it is preferable to follow the above rule in principle, but modify the rule so as to permit the adjacent constituent layers to have the same shape, in an exceptional case where the conceptual division of the product according to the original rule such that the adjacent constituent layers have different shapes is expected to result in any drawback for any portion of the product.
(2) It is noted that the above exception of the rule according to the above preferred form of the present method still falls within the scope of the method according to the principle of the first aspect of the invention, since the the adjacent constituent layers are permitted to have different thickness values, unless all of the constituent layers are determined according to the exceptional rule and have the same thickness.

In one advantageous arrangement of the above preferred form of the method, the step of determining the thickness values of the constituent layers comprises: (a) determining a plurality of parallel provisional division planes which are perpendicular to a direction of lamination of the sheets and which are spaced apart from each other at a predetermined pitch in the direction of lamination, the provisional division planes defining a plurality of provisional constituent layers; (b) calculating cross sectional areas of the provisional constituent layers in the provisional division planes; (c) determining as a final division plane one of adjacent ones of the provisional division planes which correspond to a position at which the calculated cross sectional areas of the adjacent provisional constituent layers change in the direction of lamination; and (d) determining the thickness of each final constituent layer defined by the final division planes, on the basis of a distance between adjacent ones of the final division planes in the direction of lamination.

Some product has a major part consisting of a plurality of portions each of which extends in a given reference direction and which have the same cross sectional shape in a plane perpendicular to the reference direction. Examples of such a product include a male die or punch and a female die which are used as a die set in a pressing operation. These punch and female die are constructed for relative linear movements between a mutually engaging position and a non-mutually-engaging position thereof. If such a product having a specific shape as described above is conceptually divided by parallel division planes perpendicular to the above-indicated reference direction (which is the same as the direction of lamination of the constituent layers), there are obtained two or more groups of provisional constituent layers which correspond to the above-indicated plurality of portions which have the same cross sectional shape in the plane parallel to the division planes. The constituent layers of each group have the same cross sectional area in the division planes. Therefore, the positions at which the cross sectional areas of the provisional constituent layers change in the reference direction indicate the boundaries between the groups of the provisional constituent layers, and therefore indicate final constituent layers of the product.

In view of the above finding, the method according to the above advantageous arrangement is formulated to (a) determine a plurality of parallel division planes which are perpendicular to to the direction of lamination of the constituent layers and which are spaced apart from each other at a predetermined pitch in the direction of lamination, so as to define a plurality of provisional constituent layers, (b) calculate cross sectional areas of the product in the provisional division planes, (c) calculate as a final division plane each of adjacent provisional division planes which corresponds to a position at which the calculated cross sectional areas change in the direction of lamination, and (d) determine the thickness of each final constituent layer defined by the final division planes, on the basis of a distance between the adjacent final division planes in the direction of lamination.

In the above arrangement, the thickness of each final constituent layer can be easily determined, resulting in further simplification of the fabrication of the product, and further reduction in the required time and cost of the fabrication.

The second object indicated above may be achieved according to a second aspect of the present invention, which provides a method fabricating a product, the method comprising a method of conceptually dividing the product into a plurality of constituent layers according to the first aspect of this invention, and further comprising: (i) preparing the sheets whose thickness values are substantially equal to those of the plurality of constituent layers, respectively; (ii) superposing the sheets on each other to form a laminar structure on a table; (iii) bonding adjacent ones of the sheets to each other each time one of the adjacent sheets is superposed on the other of the adjacent sheets; (iv) cutting each of the sheets after bonding of each sheet to the adjacent sheet, to form cuts in each sheet for removing an unnecessary portion of each sheet which is outside a contour of a corresponding one of the constituent layers, from a necessary portion of each sheet inside the contour, the contour being determined as the shape of the above-indicated corresponding one constituent layer; and (v) removing the unnecessary portion of each sheet at the cuts after a last one of the sheets of the laminar structure is subjected to the bonding and the cutting.

In the fabricating method according to the present second aspect of this invention, there are obtained the sheets having substantially the same thickness values as those of the constituent layers determined by the method according to the first aspect of the invention, and these sheets are sequentially superposed on each other on the table, so as to form a laminar structure. The adjacent sheets are bonded together, and each sheet is cut to form cuts in the sheet, for removing the unnecessary portion of each sheet outside the contour of the corresponding constituent layer, from the necessary portion of the sheet inside the above-indicated contour. After the last sheet of the laminar structure is subjected to the bonding and cutting operation, the unnecessary portion of the sheets are removed at the cuts formed in each sheet.

The present fabricating method according to the second aspect of this invention is effective to minimize the number of the conceptual constituent layers of the product, and therefore minimize the number of the required sheets to be superposed on each other to fabricate the product. Accordingly, the present method permits easy fabrication of the product in a short time and at a reduced cost.

The product fabricating method will be further explained to clarify the second aspect of the invention:
(1) The step of "preparing the sheets" are " may be effected in one of the following manners:
   1. A sheet having a predetermined thickness value is prepared by superposing on each other sheet members having the same thickness smaller than the predetermined thickness of the sheet to be prepared. The number of the sheet members is determined depending upon the predetermined thickness value of the sheet to be prepared.
   2. A sheet having a predetermined thickness value is selected from among a plurality of sheet members having different thickness values, so that the thickness of the selected sheet member is substantially equal to the predetermined thickness value of the sheet to be prepared.
   3. A sheet having a predetermined thickness value is prepared by cutting a blank in a plane. The blank has a thickness larger than the predetermined thickness value of the sheet to be prepared.
(2) In the step of "superposing the sheet on each other", the sheets are generally superposed in the vertical direction, but may be superposed in a direction other than the vertical direction, for instance, in the horizontal direction.
(3) The step of "cutting each of the sheets" is preferably formulated to form cuts in the unnecessary portion of each sheet as well as along the contour of the corresponding constituent layer. It is also preferable that the cuts are provided along a plurality of parallel cutting lines spaced apart from each other, for instance, in the form of a lattice consisting of first cutting lines and second cutting lines which intersect the first cutting lines. This arrangement permits easier breakage or collapsing of the unnecessary portions of the sheets, facilitating the removal of the unnecessary portions from the necessary portions, in the subsequent step of "removing the unnecessary portion of each sheet".
(4) In the step "of bonding adjacent ones of the sheets", an adhesive may be applied either after or before the sheet cutting step indicated above.
   1. Where the adhesive is applied after the sheet cutting step, the bonding step may comprises a step of applying an adhesive to each sheet after the sheet is cut, and a step of subjecting one of the two adjacent sheets including the sheet with the adhesive applied thereto, to a predetermined operation such as pressure or heat application to thereby bond the adjacent sheets with the adhesive when these adjacent sheets are superposed on each other. In this case, the adhesive may be applied to one of the two adjacent sheets which has already been bonded to the preceding sheet. In this instance, the other sheet is subjected to the predetermined operation when it is superposed on the above-indicated one sheet. Alternatively, the adhesive may be applied to one of the two adjacent sheets which has not been bonded to the preceding sheet. In this instance, the above-indicated one sheet is subjected to the predetermined operation when it is superposed on the other sheet which has already been bonded to the preceding sheet. In the latter instance, the adhesive is applied to one of the opposite surfaces of the above-indicated one sheet which faces the other sheet already bonded.
   2. Where the adhesive is applied before the sheet cutting step, the bonding step may comprise a step of applying an adhesive to each sheet before the sheet is cut, and a step of subjecting one of the two adjacent sheets including the sheet with the adhesive applied thereto, to the above-indicated predetermined operation to thereby bond the adjacent sheets with the adhesive when these adjacent sheets are superposed on each other. In this case, too, the adhesive may be applied to one of the two adjacent sheets which has already been bonded to the preceding sheet, or to the other sheet, as described above.

   The adhesive used for bonding the sheets is suitably selected from known adhesive materials such as synthetic resins containing olefine.
(5) As is apparent from the above explanation, the bonding step in the method according to the second aspect of this invention does not mean only the step of applying the adhesive to the sheets, but includes a step of enabling the adjacent sheets to be bonded together through the adhesive. Therefore, the bonding of a given sheet to the adjacent sheet does not necessarily take place when the adhesive is applied to the sheet in question or the adjacent sheet, and may be completed when the adjacent sheets are subjected to a predetermined operation for bonding together the adjacent sheets with the adhesive already applied thereto.
(6) The step of "cutting each of the sheets" may be effected by using a laser beam, a non-rotary cutter or cutting blade, a rotary cutter, or a reciprocating cutter.
   1. When the laser beam is used, a laser beam is focused on the surface of the sheet for irradiating and thereby heating a local spot on the sheet surface, and the local spot irradiated by the laser beam is moved relative to the sheet surface.
   2. When the non-rotary cutter is used, the cutter blade is first moved into the sheet in the its thickness direction, and the cutter blade and the sheet are then moved relative to each other in a plane parallel to the plane of the sheet. In this case, the cutting generally takes the form of shearing.
   3. When the rotary cutter is used, the rotary cutter and the sheet are moved relative to each other in a plane parallel to the plane of the sheet, while the rotating cutter blade is machining the sheet to remove the material.
   4. When the reciprocating cutter is used, the cutter and the sheet are moved relative to each other in a plane parallel to the plane of the sheet, while the cutter blade is reciprocating through the sheet in its thickness direction.
(7) To improve the dimensional and configurational accuracy of the product to be produced by lamination of the sheets, it is desirable to measure the total dimension of the intermediate laminar structure in the direction of lamination of the sheets when each sheet is superposed on the intermediate laminar structure, and suitably adjust at least the thickness of the next sheet based on the measured dimension.

According to one preferred form of the method according to the second aspect of this invention, the step of bonding adjacent ones of the sheets comprises bonding the adjacent sheets to each other in a bonding area within the necessary portion of each sheet.

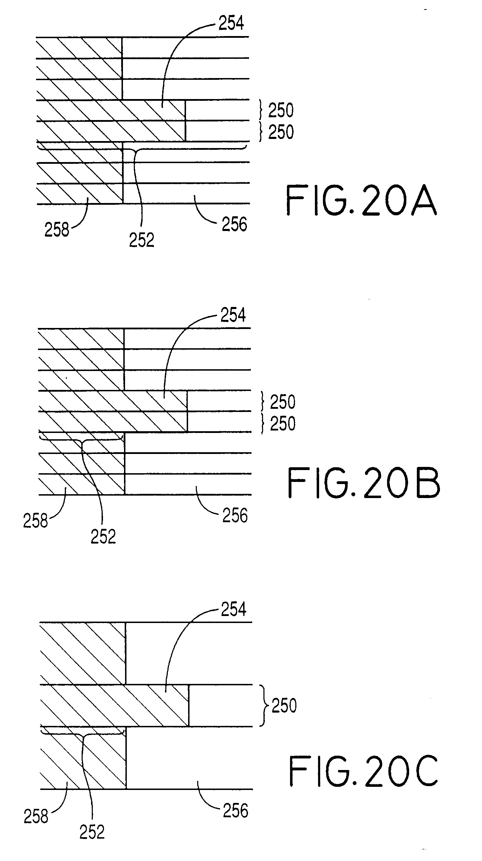

In the conventional fabrication of a product by lamination of sheets all of which have the same thickness, the adjacent sheets are bonded together with an adhesive applied to the entire surface area of the sheets, as indicated in Fig. 20A, wherein reference numeral 250 denotes the sheets, while reference numeral 252 denotes the bonding area. The bonding area 252 includes not only a necessary portion 258 of the laminar structure which gives the final product, but also an unnecessary portion 256 of the laminar structure which is to be removed. In the specific example of Fig. 20A, the necessary portion 252 includes an overhang 254 which is surrounded by the unnecessary portion 256. Since the overhang 254 is bonded to the unnecessary portion 256, the overhang 254 may be erroneously removed together with the unnecessary portion 256, by the worker in the subsequent step of "removing the unnecessary portion of each sheet". To avoid this erroneous removal, the worker should exercise an utmost care to correctly recognize the true boundary between the overhang 256 (part of the necessary portions258) and the unnecessary portion 256.

To facilitate the removal of the unnecessary portion 256 in the conventional fabrication method, it is considered to apply the adhesive to only a surface area at which the adjacent sheets contact each other within the necessary portion 258, as indicated at 252 in Fig. 20B. In this case, the overhang 254 suffers from a problem due to a relatively small thickness of each sheet 250. That is, the conventional method requires all of the sheets 250 to have the same thickness, and therefore requires the overhang 254 to be divided into relatively thin layers (250) even where the sheets 254 which provide the overhang 254 have the same cross sectional shape. If the bonding area 252 is limited to the area in which the adjacent sheets contact each other within the necessary portion 258, as indicated in Fig. 20B, the overhang 254 is not bonded to the sheets adjacent to the sheets which provide the overhang 254. Since the unnecessary and necessary portions 256, 258 have been separated by cuts formed therebetween, the overhang 254 not bonded to the adjacent upper and lower sheets is permitted to be displaced relative to the adjacent sheets. In this condition, the overhang 254 projecting in the unnecessary portion 256 should maintain its attitude and position by its own rigidity or strength, and is relatively easily deflected due to a force which acts on the overhang 254 when the sheets which are superposed on the sheets having the overhang 254 are subjected to the cutting operation. Accordingly, the positioning accuracy of the overhang 254 tends to be deteriorated, leading to reduced dimensional and configurational accuracy of the product.

In the above-indicated preferred form of the fabricating method of the present invention, the local bonding of the adjacent sheets does not cause a problem as described above, since the overhang 256 is provided by the single sheet 250 having a relatively large thickness, as indicated in Fig. 20C. That is, the principle of the method according to the second aspect of this invention permits the use of a single sheet for a portion of the product which extends in the direction of lamination and which has the same cross sectional shape. Thus, the overhang 256 has a comparatively higher degree of rigidity.

According to the present preferred form of the product fabricating method, the variable thickness of the adjacent sheets (conceptual constituent layers) and the local bonding of the sheets cooperate to not only prevent an increase in the number of the sheets (constituent layers) for reducing the required time and cost of the fabrication, but also facilitate the removal of the unnecessary portion of the laminar structure while assuring high dimensional and configurational accuracy of the overhang portion of the product.

According to another preferred form of the second aspect of the invention, the product fabricating method is adapted to fabricate a pattern for forming an article by casting.

As described above with respect to the method according to the first aspect of the invention, the pattern may be a permanent pattern which is removed from a sand mold before a mold cavity is filled with a molten material, or alternatively a consumed or "full mold" pattern which remains in a sand mold until it disappears by heat transferred from the molten material.

The present pattern fabricating method permits efficient and economical manufacture of a casting pattern, owing to considerable reduction in the number of the constituent layers or sheets of the pattern, which reduction is possible since the pattern is conceptually divided into the constituent layers so as to permit the adjacent layers to have different thickness values as described above.

The above pattern fabricating method may be advantageously practiced as part of a method of forming an article by casting, which comprises: fabricating a pattern according to the pattern fabricating method described above; and forming the article by casting using the fabricated pattern.

The present casting method permits efficient and economical manufacture of a desired article by casting, owing to considerable reduction in the number of the constituent layers or sheets of the casting pattern, which reduction is possible since the pattern is conceptually divided into the constituent layers so as to permit the adjacent layers to have different thickness values as described above.

The above casting method may be advantageously practiced as part of a method of manufacturing a product using a die, which comprises: forming an article according to the above-described casting method; and forming the product by using the article as part of a mold.

The step of "forming the product by using the article as part of a mold" may be a step of forming the product by casting, forging, injection molding or pressing using the article as part of a mold or die.

The present product manufacturing method permits efficient and economical manufacture of a desired product, owing to considerable reduction in the number of the constituent layers or sheets of the casting pattern used to form the article, which in turn is used as part of the mold for forming the final product. The number of the sheets of the casting pattern can be reduced since the pattern is conceptually divided into the constituent layers so as to permit the adjacent layers to have different thickness values as described above.

The third object may be achieved according to a third aspect of the present invention, which provides an apparatus for conceptually dividing a product into a plurality of constituent layers to fabricate the product by lamination of sheets corresponding to the constituent layers, wherein a thickness and a shape of each of the constituent layers are determined so as to permit adjacent ones of the constituent layers to have different thickness values.

In the apparatus according to the third aspect of this invention described above, there exist no restrictions when the product is conceptually divided into two or more constituent layers. Namely, all the conceptual constituent layers of the product need not have the same thickness, and the adjacent constituent layers superposed on each other in the direction of lamination are permitted to have different thickness values if necessary, so that the thickness values of the constituent layers can be freely determined depending upon the shape or other properties of the product.

According to the present apparatus, therefore, a portion of the product which extends in the direction of lamination and which having the same cross sectional shape in a plane parallel to the direction of lamination need not be divided into a plurality of constituent layers, and can consist of a single constituent layer. Accordingly, the required number of the constituent layers into which the product is conceptually divided is reduced, and the fabrication of the product by lamination of sheets corresponding to the conceptual constituent layers is simplified, resulting in reduced time and cost of the fabrication.

Since the concept of the present apparatus according to the third aspect of the invention is substantially the same as that of the method according to the first aspect of the invention, the detailed description of the first aspect of the invention applies to the present apparatus according to the third aspect of the invention.

According to one preferred form of the third aspect of the invention, the apparatus comprises a thickness determining device for determining the thickness values of the constituent layers such that the adjacent constituent layers have different shapes.

In this preferred form of the apparatus, a portion of the product which extends in the direction of lamination and which has the same cross sectional shape in a plane parallel to the direction of lamination is given or constituted by a single constituent layer, and need not be divided into two or more constituent layers.

Therefore, the required number of the constituent layers which conceptually constitute the product is minimized, and the fabrication of the product is further simplified, leading to further reduction in the required time and cost of the fabrication.

The above preferred form of the apparatus will be further explained.

The thickness determining means of the apparatus may include a shape determining device as well as the thickness determining device. The shape determining device may be adapted to determine the shape of each constituent layer in one of the following manners.
1. One of the cross sectional shapes at the upper and lower surfaces of each constituent layer of the product is determined as the shape of that constituent layer. This determination is based on an assumption that the upper and lower surfaces of each constituent layer defined by final division planes perpendicular to the direction of lamination have the same cross sectional shape.
2. The shape of each constituent layer defined by the final division planes is determined to be a sum of sets of the cross sectional shapes or contours at the upper and lower surfaces of the constituent layer in question. In other words, the shape of the constituent layer is obtained by superposing the cross sectional shapes or contours at the upper and lower surfaces of that constituent layer. This determination is based on an assumption that the constituent layer may have different cross sectional shapes or contours at the planes corresponding to the upper and lower surfaces of that constituent layer.

In the second case, the outer profile of the product fabricated may be larger than the original profile, due to the sum of sets of the outer contours at the upper and lower surfaces of the constituent layer. However, the fabricated product may be subsequently machined into the original profile.

In one advantageous arrangement of the above preferred form of the apparatus, the thickness determining device comprises: (a) provisional division plane determining means for determining a plurality of parallel provisional division planes which are perpendicular to a direction of lamination of the sheets and which are spaced apart from each other at a predetermined pitch in the direction of lamination, the provisional division planes defining a plurality of provisional constituent layers; (b) calculating means for calculating cross sectional areas of the product in the provisional division planes; (c) final division plane determining means for determining as a final division plane each of adjacent ones of the provisional division planes which corresponds to a position at which the calculated cross sectional areas change in the direction of lamination; and (d) thickness determining means for determining the thickness of each final constituent layer defined by the final division planes, on the basis of a distance between the adjacent ones of the final division planes in the direction of lamination.

The above advantageous arrangement of the present apparatus is constructed in view of the same finding as described above with respect to the advantageous arrangement of the first aspect of the invention, so as to (a) determine a plurality of parallel division planes which are perpendicular to to the direction of lamination of the constituent layers and which are spaced apart from each other at a predetermined pitch in the direction of lamination, so as to define a plurality of provisional constituent layers, (b) calculate cross sectional areas of the product in the provisional division planes, (c) calculate as a final division plane each of adjacent provisional division planes which corresponds to a position at which the calculated cross sectional areas of the adjacent provisional constituent layers change in the direction of lamination, and (d) determine the thickness of each final constituent layer defined by the final division planes, on the basis of a distance between the adjacent final division planes in the direction of lamination.

In the above arrangement, the thickness of each final constituent layer can be easily determined, resulting in further simplification of the fabrication of the product, and further reduction in the required time and cost of the fabrication.

The concept of the present advantageous arrangement of the apparatus is substantially the same as that of the advantageous arrangement of the method according to the first aspect of the invention, the foregoing description of which applies to the present apparatus. However, the present apparatus will be better understood by the following supplemental explanation:

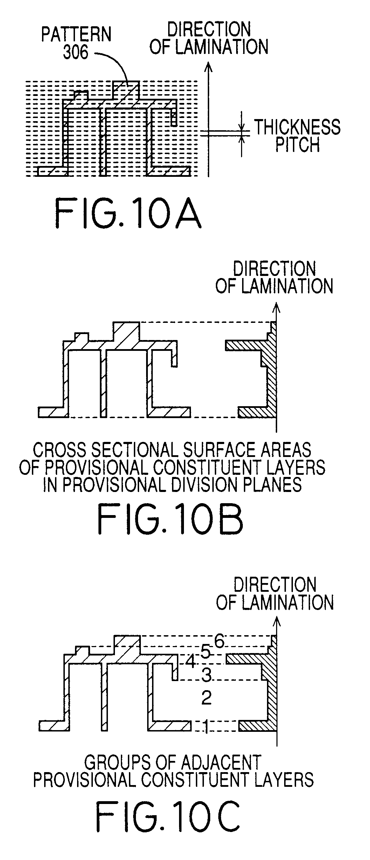

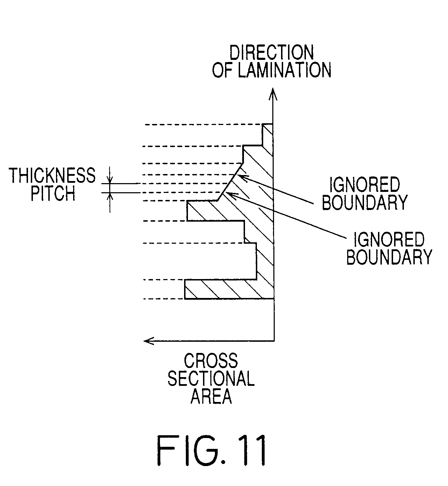

In the above arrangement, the final division planes can be correctly determined as indicated at 1 through 6 in Fig. 10C, where the product consists of two or more portions which extend in the direction of lamination and each of which has the same cross sectional area in the plane parallel to the direction of lamination (in the plane perpendicular to the provisional division planes), as indicated in Fig. 10B. If the product has a portion whose cross sectional area in the above-indicated plane continuously changes in the direction of lamination, as indicated in Fig. 11, the final division planes may not be correctly or suitably determined for that portion of the product. To deal with this drawback, the final division plane determining means of the apparatus may include one of the following means:
1. Means for informing the operator of the apparatus that the final division planes cannot be correctly determined for a portion of the product whose cross sectional area continuously changes in the direction of lamination.
2. Means for prompting the operator to judge whether the determination of the final division planes by the final division plane determining means is adequate, and means for permitting the operator to manually designate the final division planes, if the determination by the determining means is not adequate.

The means for permitting the operator to manually designate the final division planes may be adapted to (i) designate the final division planes, without any assistance by the apparatus, or (ii) provide an assisting indication of some of the provisional division planes as candidate final division planes, and prompt the operator to select the appropriate ones of the candidate final division planes as the final division planes.

The fourth object indicated above may be achieved according to a fourth aspect of this invention, which provides an apparatus for fabricating a product, comprising an apparatus of the third aspect of the invention for conceptually dividing the product into a plurality of constituent layers, and further comprising: (i) a sheet supply device for preparing the sheets whose thickness values are substantially equal to those of the plurality of constituent layers, respectively; (ii) a laminating device for superposing the sheets on each other to form a laminar structure on a table; (iii) a bonding device for bonding adjacent ones of the sheets to each other each time one of the adjacent sheets is superposed on the other of the adjacent sheets; and (iv) a cutting device for cutting each of the sheets after bonding of each sheet to the adjacent sheet, to form cuts in each sheet for removing an unnecessary portion of each sheet which is outside an outer contour of a corresponding one of the constituent layers, from a necessary portion of each sheet inside the outer contour, the outer contour being determined as the shape of the above-indicated corresponding one constituent layer.

The product fabricating apparatus according to the fourth aspect of this invention is suitable for practicing the product fabricating method, permitting efficient and economical manufacture of the product, owing to considerable reduction in the number of the constituent layers or sheets of the product, which reduction is possible since the pattern is conceptually divided into the constituent layers so as to permit the adjacent layers to have different thickness values as described above.

The fifth object indicated above may be achieved according to a fifth aspect of the present invention, which provides an apparatus for preparing a sheet having a predetermined thickness, comprising: (a) a holder for holding a blank; (b) a cutting tool for cutting the blank held by the holder; (c) a first moving device for moving the holder and the cutting tool relative to each other in a first plane, to provide a cut through the blank by the cutting tool in a plane parallel to the first plane, for removing a portion of the blank as the sheet; and (d) a second moving device for moving the holder and the cutting tool relative to each other in a second plane intersecting the first plane, to change a position of the plane of the cut for adjust a thickness of the sheet.

For practicing the product fabricating method according to the second aspect of the invention or for operating the product fabricating apparatus according to the fourth aspect of the invention, an apparatus for preparing a sheet having a desired thickness is essential. This sheet preparing apparatus is also useful for the conventional fabrication of a product by lamination of sheets. Thus, the sheet preparing apparatus according to the fifth aspect of this invention is convenient for the conventional product fabricating method and apparatus, as well as for the product fabricating method and apparatus according to the present invention.

In the sheet preparing apparatus of the present invention, the blank is cut in a plane, and the plane of cut through the blank can be changed in a direction perpendicular to the plane of cut.

The present sheet preparing apparatus according to the fifth aspect of the invention is capable of adjusting the thickness values of the sheets to be obtained by cutting of the blank, depending upon the determined thickness values of the conceptual constituent layers of the product. In other words, the present apparatus permits the manufacture of the sheets having different thickness values suitable for practicing the second and fourth aspects of the invention.

The present sheet preparing apparatus will be further explained.
(1) The blank may be cut mechanically, thermally, electrochemically, electrically or optically. The mechanical cutting may be machining, sawing, shearing or ultrasonic machining. The electrochemical cutting may be electro-chemical machining. The electrical cutting may be electrical discharge machining, electron beam machining or plasma cutting. The optical cutting may be laser cutting.
(2) The cutting tool may be a thermally cutting wire such as a nichrome wire, a cutting blade, or a laser generator. When the thermally cutting wire or laser generator is used as the cutting tool, the blank is thermally cut by melting or fusion of the material by the heat generated by the cutting tool. Where the cutting blade is used, the blank is mechanically cut by machining or shearing with a linear or rotary motion of the blade.

According to a further aspect of the present invention, there is provided a method of conceptually dividing a product into a plurality of constituent layers to fabricate the product by lamination of sheets corresponding to the constituent layers, wherein the product consists of a combination of parts which are disposed relative to each other in a predetermined positional relationship with each other when the product is conceptually divided into the plurality of constituent layers, and wherein a thickness and a shape of each of the constituent layers are determined so as to permit adjacent ones of the constituent layers to have different thickness values.

The parts of the product may include patterns for casting dies which are used for forming a desired article.

According to a still further aspect of the invention, there is provided a method of fabricating a product, comprising the above method of conceptually dividing the product into a plurality of constituent layers, and further comprising a step of superposing the sheets on each other to form a laminar structure which gives the patterns, and wherein the patterns cooperate with a mass of sand to form a mold for forming the dies.

For instance, the sheets which constitute the patterns may be formed of a material which disappears upon exposure to heat transferred from a molten metal introduced into the mold, so that a volume occupied by the material is filled with the molten metal, and the patterns are formed in the mass of sand.

### BRIEF DESCRIPTION OF THE DRAWINGS

The above and optional objects, features, advantages and technical and industrial significance of the present invention will be better understood by reading the following detailed description of presently preferred embodiments of the invention, when considered in connection with the accompanying drawings, in which:
Fig. 1 is a view illustrating a method of manufacturing a final product by pressing, which includes a fabricating process for fabricating patterns for dies used for manufacturing the final product, by lamination according to one embodiment of this invention, a casting process for casting the dies using the fabricated patterns, a machining process for machining the dies as needed, and a pressing process for manufacturing the final product by pressing using the dies;
Fig. 2 is a cross sectional view of the dies used in the pressing process of Fig. 1;
Fig. 3 is a view illustrating steps of the casting process of Fig. 1;
Fig. 4 is perspective view of a lower die which is used in place of the lower die of Fig. 2 and which is manufactured by a pattern fabricated according to one preferred embodiment of the method of this invention using one preferred embodiment of a pattern fabricating apparatus of the invention;
Fig. 5 is a view showing steps of processing data used for fabricating the pattern for the lower die in the fabricating process of Fig. 1;
Fig. 6 is a view showing steps of fabricating the pattern in the fabricating process of Fig. 1;
Fig. 7 is a block diagram illustrating one preferred embodiment of data processing apparatus used in the fabricating process of Fig. 1;
Fig. 8 is a flow chart illustrating a routine for automatic determination of thickness values of constituent layers of the pattern in the data processing step of Fig. 5;
Figs. 9A, 9B and 9C are views showing an example of a product having a slant surface;
Figs. 10A, 10B and 10C are views indicating the thickness determination of the constituent layers of the pattern for the lower die of Fig. 4, in the thickness determination routine of Fig. 8;
Fig. 11 is a graph indicating an example of a gradual change in the cross sectional area of the constituent layers as calculated in the routine of Fig. 8;
Fig. 12 is a flow chart illustrating a routine for automatic determination of cutting lines in the data processing step of Fig. 5;
Fig. 13 is a flow chart illustrating a routine for automatic determination of bonding areas in the data processing step of Fig. 5;
Fig. 14 is a view showing the preferred form of the apparatus for fabricating the pattern for the lower die in the laminating step of Fig. 6;
Fig. 15 is a cross sectional view of a laminar structure of sheets fabricated according to the preferred embodiments of the method, data processing apparatus and pattern fabricating apparatus of this invention, which laminar structure provides a combination product consisting of patterns for upper and lower dies and reinforcing members for the upper and lower dies;
Fig. 16 is a plan view of the fourth layer or sheet of the laminar structure of Fig. 15 as counted from the lowermost layer;
Fig. 17 is a view showing one modified form of a sheet supply device for supplying constituent sheets of a laminar structure, which device is alternative to the counterpart device used in the apparatus of Fig. 14;
Fig. 18 is a view showing another modified form of the sheet supply device;
Figs. 19A and 19B are views for explaining advantages of the present invention;
Figs. 20A, 20B and 20C are cross sectional views of laminar structures, for explaining advantages of this invention; and
Figs. 21A and 21B are views for explaining another embodiment of the invention.

### DETAILED DESCRIPTION OF THE PREFERRED EMBODIMENTS

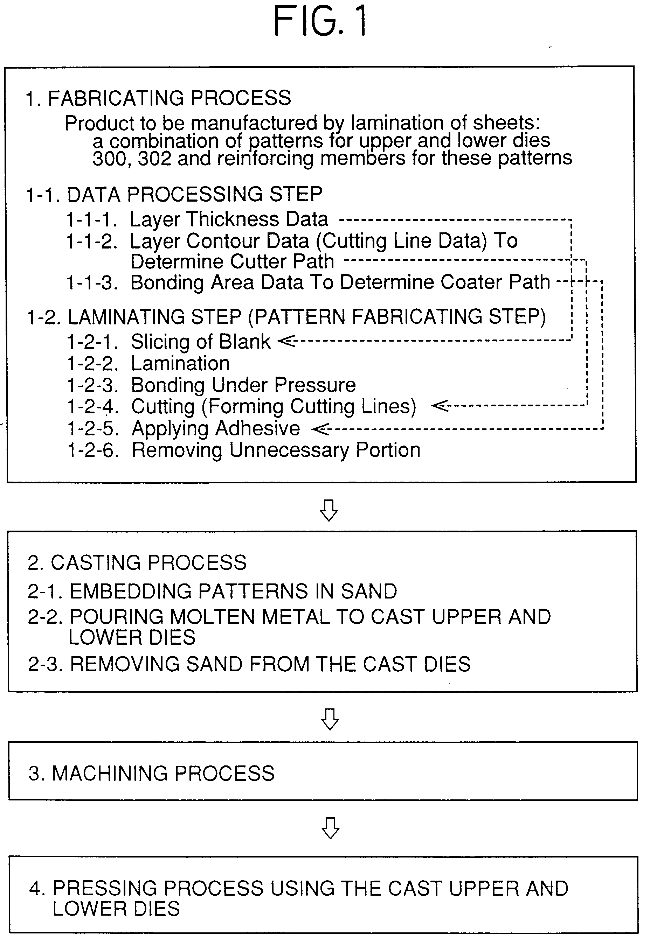

Referring first to Fig. 1, there is illustrated a series of operations to manufacture a final product by pressing, including a fabricating process, a casting process, a machining process and a pressing process. The fabricating process is effected according to one embodiment of the present invention for fabricating a combination of master patterns or models of an upper and a lower die used to manufacture the final product in the pressing process, and reinforcing members used to reinforce these patterns when the upper and lower dies are produced in the casting process using the patterns. The machining process is effected to machine the cast dies as needed to finish the dies, so that the dies may be used for manufacturing the final product in the pressing process.

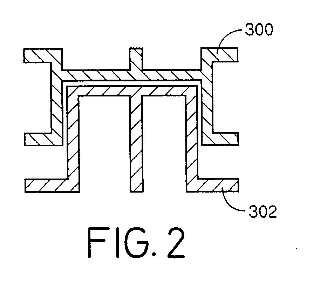

The upper and lower dies used in the pressing process are indicated in cross section in Fig. 2 at 300 and 302, respectively. These upper and lower dies 300, 302 are constructed to engage each other and cooperate to perform a pressing operation on a workpiece such that the workpiece is formed into a desired shape by pressing and/or cutting. In the specific example of Fig. 2, the upper die 300 is a female die while the lower die 302 is a male die or punch.

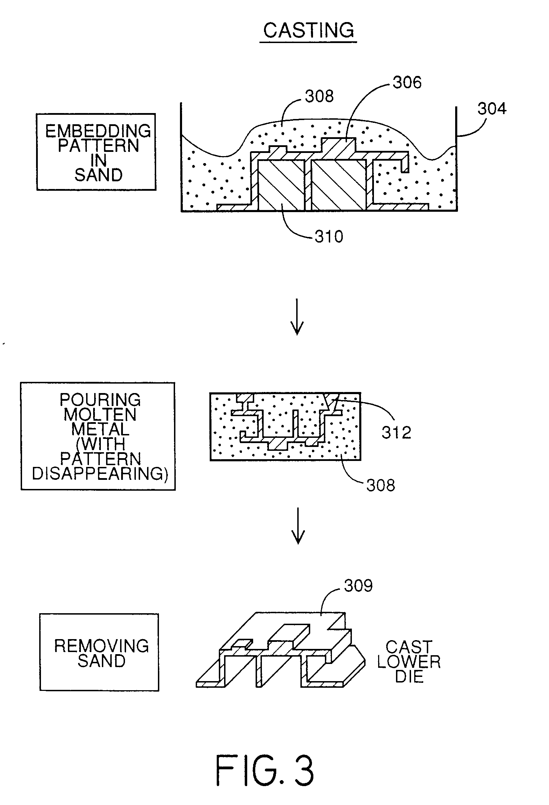

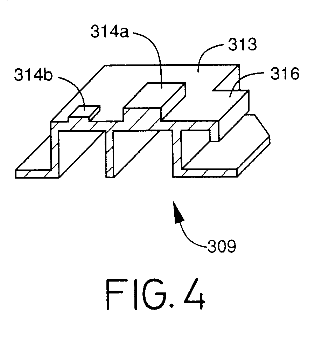

In the casting process, the patterns or models of the upper and lower dies are formed by casting in a so-called "full mold" process. An example of the casting process to cast the lower die in the full mold process is illustrated in Fig. 3. In this example of Fig. 3, the lower die to be cast is structurally different from the lower die 302 of Fig. 2. That is, the lower die 309 as shown in Fig. 4 is cast by using a "full mold" pattern or model 306. For easier understanding of the concept of this invention, the following description refers to this lower die 309, rather than the lower die 302 of Fig. 2 of simple structure.

As shown in Fig. 4, the lower die 309 to be produced using the pattern 306 has a planar portion 313 on which there are formed two bosses 314a, 314b. Further, an overhand 316 is formed so as to extend from the planar portion 313 such that the upper surface of the overhang 316 is flush with the upper surface of the planar portion 313.

Referring back to Fig. 3 illustrating the casting process, the pattern 306 for forming the lower die 309 in the full mold process is first positioned within a flask 304, and is then embedded in a mass of sand 308 while the pattern 306 is reinforced by a suitable reinforcing member 310, which protects the pattern 306 against deformation by the sand 308. The reinforcing member 310 is used since the pattern 306 is formed of foamed polystyrene and does not have a sufficient degree of rigidity. A similar reinforcing member is used when the upper die as indicated at 300 in Fig. 2 is produced.

When a portion of the space in the flask 304 on one of the opposite sides of the pattern 306 is filled with the sand 308, the reinforcing member 310 is held in engagement with the other side of the pattern 306. Before the portion of the space in the flask 304 on this other side of the pattern 306 is subsequently filled with the sand 308, the reinforcing member 310 is removed.

After the pattern 306 is embedded in the sand mass 308, a sprue and a feeding head are formed through the sand mass 308 such that these sprue and feeding head communicate with the pattern 306. Namely, the pattern 306 remains in the sand mass 308. In this state, a molten metal 312 having a high temperature is poured through the sprue and fed toward the pattern 306. As a result, the pattern 306 disappears due to heat transferred from the molten metal 312, whereby the space corresponding to the pattern 306 is filled with the molten metal 312. After the metal 312 is cooled and solidified, the sand 308 is removed from the solidified metal mass, whereby the lower die 309 having the same configuration as the pattern or pattern 306 is formed by casting in the full mold process.

The machining process is performed between the casting and pressing processes described above, to finish the surfaces of the cast upper and lower dies with rotary cutting tools on a numerically controlled machine, for example.

The fabricating process is a process in which the patterns used to cast the upper and lower dies, and the reinforcing members used for the patterns are fabricated by lamination. In the present example, the patterns include the pattern 306 for the lower die 309, and the reinforcing members include the reinforcing member 310 for the pattern 306.

Upper and lower dies for producing a desired product as described above are conventionally manufactured by a numerically controlled machine, for example. Described more specifically, a blank having a larger size than the die to be manufactured is machined by rotary cutting tools which are moved three-dimensionally under numerical control. However, this machining process cannot sufficiently eliminate manual operations which are likely to cause erroneous or inefficient production of the patterns, as described below in detail with respect to the lower die 309 shown in Fig. 4.

The bosses 314a, 314b may be formed on the planar portion 313 of the lower die 309, by cutting a blank on a numerically controlled machine. In this case, however, the relatively large upper surface of the planar portion 313 should also be machined, and this machining takes a considerable time. This time-consuming machining may be eliminated by bonding the bosses 314a, 314b to the planar portion 313. In this case, the lower die 309 is first produced by numerically controlled machining, without the bosses 314a, 314b, while these bosses are produced separately also by numerically controlled machining, and the bosses are bonded to the planar portion 313 of the lower die 309. Thus, the production requires a manual operation for bonding of the bosses 314a, 314b.

The lower die 309 shown in Fig. 4 is difficult to be machined, since the underside of the overhang 316 is not easily accessible by a cutting tool. Like the bosses 314a, 314b, the overhang 316 produced by numerically controlled machining may be bonded to the planar portion 313 of the lower die 309 produced by numerically controlled machining without the overhang 316. In this case, too, a manual operation is required for bonding of the overhang 316.

A desired part such as a die may be manufactured by lamination of constituent layers which have appropriate outer contours or shapes. This lamination process makes it possible to manufacture the lower die 309 with the bosses 314a, 314b and the overhang 316, with minimum requirement for manual operations, resulting in a minimum risk of erroneous production of the die 309 due to the manual operations.

The lamination process described above is an effective form of high-speed three-dimensional formation of a pattern, master pattern or prototype, so-called "rapid prototyping".

The fabricating process according to the present embodiment of the invention, which is an example of the lamination process described above, has the following advantages over the conventional lamination process:

### [1] VARIABLE THICKNESS OF CONSTITUENT LAYERS

In the conventional lamination process, a product to be manufactured by lamination is conceptually divided into a plurality of constituent layers which have the same thickness in the direction of the lamination. In manufacturing the product, the cross sectional shapes of the constituent layers are first determined. Then, sheets of a selected material which have the same thickness and which have the same cross sectional shapes as the constituent layers are superposed on each other. In the fabricating process according to the present invention, the constituent layers of the product (e.g., pattern 306 for the lower die 309) are determined so as to permit the constituent layers to have different values of thickness in the direction of the lamination, and such that the adjacent layers have different outer contours or cross sectional shapes or areas. In other words, the cross sectional shapes of the constituent layers are determined in the manner as described above, and the appropriate sheets which have the same cross sectional shapes as the respective constituent layers and which may have different thickness values are superposed on each other to form the product.

In the fabricating process according to the principle of this invention, a portion of the product having the same cross sectional area or shape over a long distance in the direction of lamination of the sheets need not be formed by two or more sheets each of which has the same thickness, but may be formed by a single sheet having a relatively large thickness. This fabricating process makes it possible to reduce the time and cost required for manufacturing the product.

### [2] USE OF SHEETS HAVING DIFFERENT THICKNESS VALUES

To permit the product to be formed by sheets having different thickness values, it is necessary to supply the sheets with selected thickness values. The laminating step of the fabricating process according to the present embodiment includes a step in which sheets having the required thickness values are prepared by cutting a rectangular blank in a plane parallel to the top surface, using a linearly extending thermal cutting wire which is moved relative to the blank along the above-indicated plane. The thermal cutting wire is adapted to generate heat for thermally melting or fusing the material of the blank, to thereby slice the blank to provide a sheet having a selected thickness.

### [3] SIMULTANEOUS FABRICATION OF TWO OR MORE PRODUCTS

In the conventional lamination process, only one single product is manufactured in the form of a laminar structure consisting of a plurality of sheets superposed on each other. However, the present fabricating process makes it possible to concurrently manufacture two or more products in the form of a single laminar structure, which may be divided into the separate products by removing an unnecessary portion from the laminar structure with the aid of cuts formed in the laminar structure. The removal of the unnecessary portion to divide the laminar structure into the separate products may be easily effected owing to local bonding of the adjacent sheets as described below in detail. The local bonding of the sheets may lead to reduced geometrical or configurational accuracy of the product since the accuracy largely depends upon the rigidity or strength of each sheet (constituent layer). However, the sheets can be given a sufficiently large degree of rigidity according to the present fabricating process because the laminar structure need not consist of thin sheets such as paper sheets, all of which have the same thickness.

For instance, the patterns used for casting the upper and lower dies 300, 302 of Fig. 2 are designed to engage each other, and can therefore be formed concurrently as a single laminar structure which consists of two portions corresponding to the two patterns. In the conventional process, two products are formed from respective two laminar structures, a considerably large portion should be removed from each laminar structure. In the present fabricating process, the amount of the portion to be removed from the laminar structure to produce the two patterns is significantly reduced, whereby the material cost can be accordingly reduced. Further, the concurrent manufacture of two or more products according to the present embodiment results in significant reduction in the time required for the manufacture.

### [4] LOCAL BONDING OF SHEETS

In the conventional lamination process, the adjacent ones of the sheets superposed on each other are bonded together with an adhesive applied over the entire area of the initially contacting surfaces. That is, the adjacent sheets are bonded also at their portions that are subsequently removed manually by a worker in the final step. The bonding of these portions of the sheets (referred to as "unnecessary portion of the laminar structure") tends to make it difficult for the worker to distinguish the unnecessary portion of the laminar structure from the other or necessary portion which gives the desired product. Thus, the worker may erroneously remove part of the necessary portion of the laminar structure. In the present fabricating process according to the principle of this invention, on the other hand, the adjacent sheets are bonded together locally only at their contacting surface areas within the necessary portion which eventually gives the product. According to this local bonding of the adjacent sheets of the laminar structure, the sheets are not bonded together at the unnecessary portion of the laminar structure, which unnecessary portion may be easily distinguished from the other portion when the unnecessary portion is removed from the structure to obtain the product.

As described above, the present fabricating process facilitates the production of a desired product or products, without a damage thereof in the final material removing step, even where the product has a complicated structure or where the products are concurrently produced from a single laminar structure.

As indicated in Fig. 1, the fabricating process in the present embodiment consists of a data processing step and a laminating step. The data processing step includes generation of data indicative of the thickness values and outer contours or shapes of constituent layers of a product (e.g., pattern 306) according to an embodiment of the invention. The laminating step is a step of fabricating the patterns based on the data generated in the data processing step.

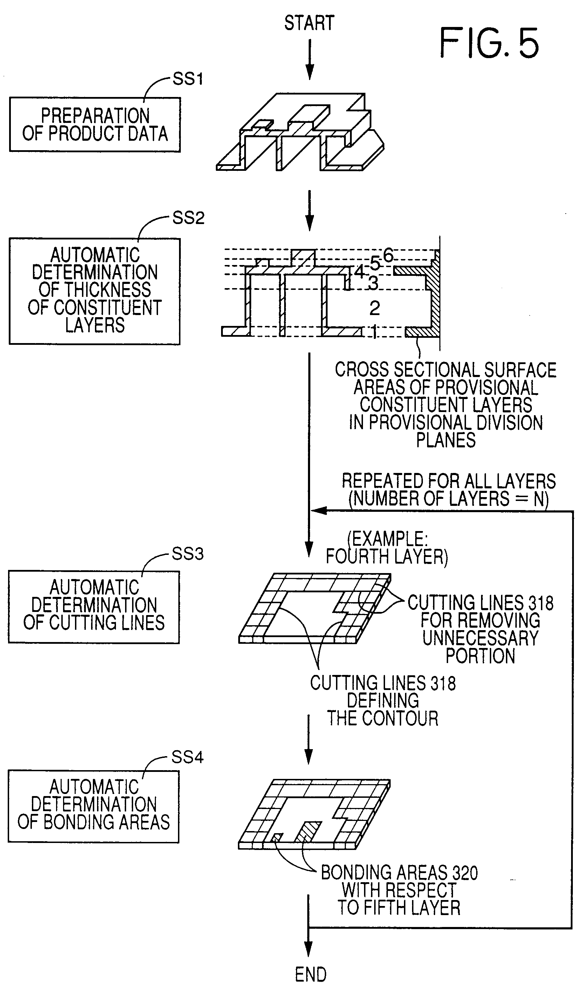

The details of the data processing step are illustrated in Fig. 5. The data processing step includes: sub-step SS1 for preparing product data defining each product as designed by the designer; sub-step SS2 for automatically determining the thickness values of constituent layers of the product; sub-step SS3 for automatically determining cutting lines 318 along which cuts are provided in a laminar structure formed in the laminating step; and sub-step SS4 for automatically determining the bonding areas 320 of adjacent sheets corresponding to the adjacent constituent layers of the product. The above-indicated sub-steps SS1 through SS4 are implemented in the order of description. The automatic determination in sub-step SS3 and the automatic determination of the cutting lines in sub-step SS4 are repeatedly implemented for all of the constituent layers of the product, the number of the layers being represented by "N".

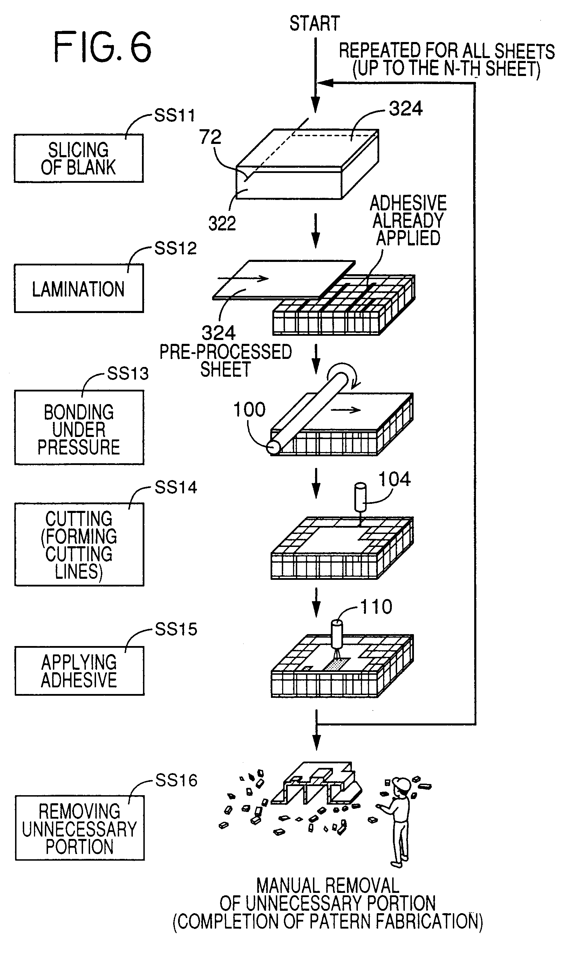

The details of the laminating step of the fabricating process are illustrated in Fig. 6. The laminating step includes: sub-step SS11 for cutting or slicing a blank 322 by a cutting tool in the form of a thermal cutting wire 72 to provide a pre-processed sheet 324; sub-step SS12 superposing the sheet 324 on an intermediate laminar structure; sub-step SS13 for bonding the sheet 324 under pressure to the intermediate laminar structure; sub-step SS14 for forming cuts in the sheet 324 along the cutting lines 318 determined in sub-step SS3 of the data processing step of Fig. 5; sub-step SS15 for applying an adhesive to an area of the sheet 324 corresponding to the bonding area 320 determined in sub-step SS4 in the data processing step of Fig. 5; and sub-step SS16 for removing the unnecessary portion from a laminar structure which is eventually formed by repeated implementation of sub-steps SS11 through SS15 for all of the sheets 324 corresponding to the constituent layers of the pattern 306 whose thickness values are determined in sub-step SS2 in the data processing step of Fig. 5. In the present embodiment, the sub-step SS15 and SS13 cooperate to provide a step of bonding the adjacent sheets, and the adhesive applying sub-step SS15 is implemented after the cutting sub-step SS14. As indicated above, the sub-steps SS11 through SS15 are implemented for each of the sheets 324 corresponding to all of the constituent layers of the pattern 306 determined in the data processing step of Fig. 5.

The data processing step of the fabricating process will be described in detail. Although the present embodiment is adapted to concurrently fabricate the pattern 306 for the lower die 309, the pattern for the upper die, the reinforcing member 310 for the pattern 306 and the reinforcing member for the upper die, as indicated above, the following description refers to only the fabrication of the pattern 306 for the lower die 306, in the interest of simplification of the explanation.

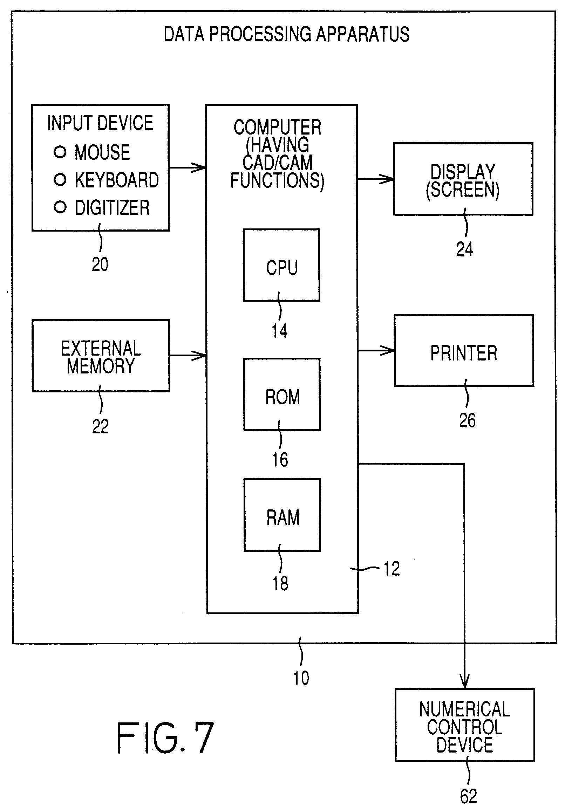

The data processing step is practiced by a data processing apparatus 10 shown in Fig. 7, which is constructed according to one embodiment of this invention so as to generate data necessary for fabricating the pattern 306 in the laminating step.

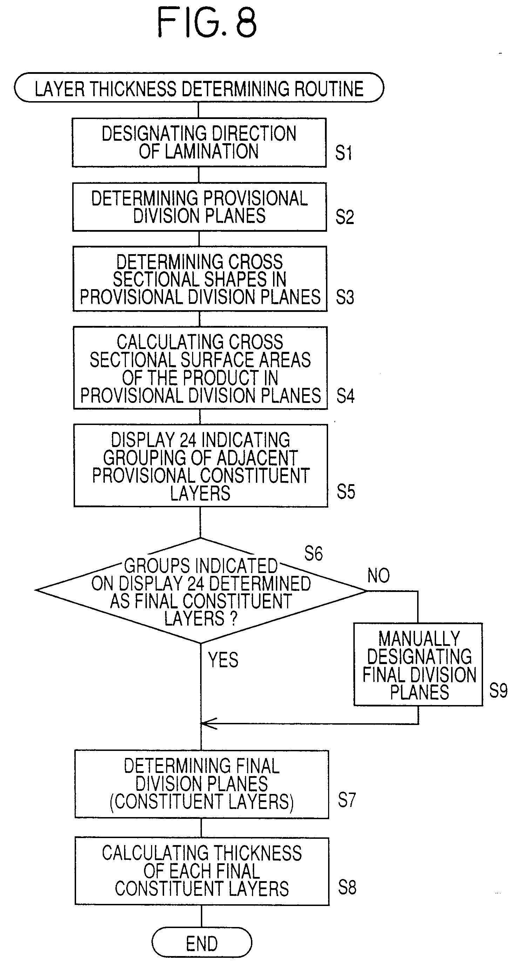

The data processing apparatus 10 includes a computer 12 which incorporates a central processing unit (CPU) 14, a read-only memory (ROM) 16 and a random-access memory (RAM) 18. The ROM 16 stores various control programs including a program for executing a layer thickness determining routine illustrated in the flow chart of Fig. 8. The CPU 14 is adapted to execute those programs for perform data processing operations as required, while utilizing a temporary data storage function of the RAM 18.

To the computer 12, there are connected an input device 20, an external memory device 22, a display 24 and a printer 26. The input device 20 is provided to enable the operator to enter data which define the pattern 306 as designed, and the external memory 22 stores various data such as solid model data which represent the particulars of the pattern 306 and which are generated based on the data entered through the input device 20. The display 24 has a screen and is adapted to display data entered through the input device 20, and data generated by the computer 12. The printer 26 is adapted to perform a printing operation on a suitable recording medium such as a paper sheet.

The data processing apparatus 10 has a CAD function and a CAM function, namely, function of designing and manufacturing desired parts or products with the aid of the computer 12. For instance, the CAM function includes conversion of part design data into numerical control data for manufacturing parts by numerically controlled machines.

The data processing apparatus 10 implements the above-described sub-steps SS1-SS4 in the following manner:

### (1) Product Data Preparation Sub-Step SS1

In this sub-step SS1, the apparatus 10 is operated to generate three-dimensional solid model data representative of the pattern 306, while utilizing the CAD function, on the basis of the data entered through the input device 20 by the designer or user. The generated solid model data are stored in the external memory 22 and are retrieved as needed.

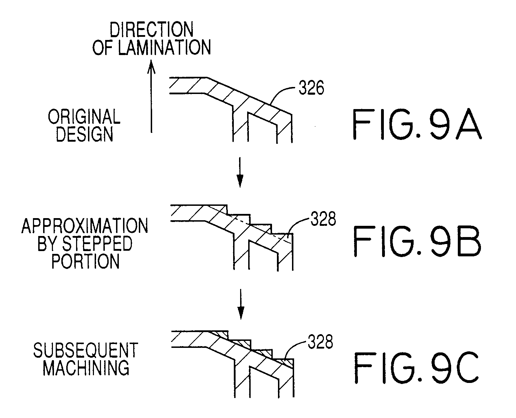

To reduce the time required for the fabrication of the pattern 306, it is important to minimize the number N of the constituent layers of the pattern 306, namely, the number N of the corresponding sheets 324. In this respect, some product to be manufactured by lamination has a slant portion as indicated at 326 in Fig. 9A, that is, a portion which is not perpendicular but is inclined to the direction of lamination of the constituent layers. If such a product is conceptually divided into constituent layers according to the product data as generated by the computer 12, the constituent layers corresponding to the slant portion 326 all have the smallest thickness corresponding to the predetermined thickness pitch in the direction of lamination of the constituent layers, so that the number N of the layers tends to be comparatively large, requiring an increased time for fabricating the product by lamination of sheets.

To minimize the fabrication time, the user of the apparatus 10 re-designs the product by replacing the slant portion 326 with a stepped portion as indicated in Fig. 9B in which the slant surface is approximated by four steps 328, for instance. In this case, data representative of the re-designed product are stored in the external memory 22. This re-designing contributes to reduction in the number of the constituent layers corresponding to the slant portion 326 when the constituent layers are determined in the next sub-step SS2.

In the above case, however, the product such as the pattern 306 formed by lamination of sheets corresponding to the constituent layers is given the stepped portion rather than the slant portion as originally designed. This stepped portion may be corrected into the originally designed slant portion by machining to remove the steps 328 as indicated in Fig. 9C, in the machining process described above by reference to Fig. 1. This correction may be suitably effected by numerically controlled machining according to the original product data and the re-designed product data. The machining process thus makes it possible to maximize the advantage of the lamination according to the principle of the present invention in which only one constituent layer corresponds to each of the steps 328. If the machining process is not performed, the lower die 309 produced by casting using the pattern 306 is undesirably given a stepped portion.

### (2) Automatic Layer Thickness Determining Sub-Step SS2

In this automatic layer thickness determining sub-step SS2, the above-indicated layer thickness determining routine illustrated in the flow chart of Fig. 8 is executed to generate layer thickness data representative of determined thickness values of a plurality of constituent layers of the pattern 306 to be fabricated. The program for executing this routine is stored in the ROM 16 of the data processing apparatus 10. The determined thickness values of the constituent layers correspond to the thickness values of the corresponding sheets 324 which are superposed on each other to form the pattern 306 in the laminating step of Fig. 6.

The layer thickness determining routine of Fig. 8 will be described by reference to Figs. 10A, 10B and 10C.

The routine of Fig. 8 is initiated with step S1 in which the pattern 306 to be fabricated is displayed on the screen of the display 24, on the basis of the product data which have been generated in the product data preparation sub-step SS1 and stored in the RAM 18. In this condition, the operator of the apparatus 10 manipulates the input device 20 to designate the direction of lamination of constituent layers of the pattern 306, that is, the direction in which the sheets 324 corresponding to the constituent layers are superposed on each other in the laminating step of Fig. 6.

Step S1 is followed by step S2 in which the dimension of the pattern 306 in the designated direction of lamination is conceptually divided by a predetermined thickness pitch to determine a plurality of parallel provisional division planes indicated by parallel dashed lines in Fig. 10A. The provisional division planes are perpendicular to the direction of lamination of the provisional constituent layers and are spaced apart from each other at the predetermined thickness pitch in the direction of lamination. The parallel lines indicating the provisional division planes are superimposed on the cross sectional view of the pattern 306 provided on the display 24, as also indicated in Fig. 10A. The thickness pitch is a lower limit of the thickness of the sheet 324 below which the sheet 324 cannot be accurately obtained by cutting or slicing the blank 322 by the thermal cutting wire 72 in the laminating step of Fig. 6.

Then, the control flow goes to step S3 to determine the cross sectional shapes of the pattern 306 as viewed in the determined provisional division planes. Then, step S4 is implemented to calculate the cross sectional surface areas of the pattern 306 in the provisional division planes. Thus, it is possible to determine whether the adjacent provisional constituent layers have the same cross sectional surface area or not. The calculated cross sectional surface areas of the provisional constituent layers are indicated in Fig. 10B. Where the product to be fabricated consists of two or more parts (one of which is the pattern 306 in this specific example), the cross sectional surface area to be calculated is the total cross sectional surface area of all the parts in each provisional division plane. Step S4 is followed by step S4 in which the display 24 indicates groups of the provisional constituent layers which are determined such that each group consists of one or more provisional constituent layers having the same cross sectional surface area in the provisional division planes. The determined groups are indicated as 1, 2, 3, 4, 5 and 6 in Fig. 10C.

Then, the control flow goes to step S6 to prompt the operator to determine whether the groups of the adjacent provisional constituent layers indicated on the display 24 should be determined as final constituent layers of the pattern 306. If the operator has manipulated the input device 20 to determine the indicated groups as the final constituent layers, that is, if an affirmative decision (YES) is obtained in step S6, the control flow goes to step S7 to determine the groups of the adjacent provisional constituent layers indicated on the display 24 as the final constituent layers. The provisional division planes which define each final constituent layer will be referred to as "final division planes". Step S7 is followed by step S8 in which the distance between the final division planes defining each final constituent layer is calculated as the thickness of each final constituent layer. Thus, the thickness values of the determined final constituent layers of the pattern 306 are determined.

If the operator judges that the groups of the provisional constituent layers indicated on the display 24 should not be determined as the final constituent layers, the operator manipulates the input device 20 to that effect. In this case, a negative decision (NO) is obtained in step S6, and the control goes to step S9 in which the operator designates the final final division planes (final constituent layers) as desired. In this case, the final division planes or constituent layers are determined in step S7 as designated by the operator. The designation of the desired final division planes by the operator may be effected by designating the provisional division planes as indicated in Fig. 10A by parallel dashed lines, which should not be the final division planes, that is, which should not define the final constituent layers.

For instance, the operator designates the final division planes in the case where the cross sectional surface areas of the provisional constituent layers defined by some of the provisional division planes gradually or continuously change across the provisional divisional lines, as indicated in Fig. 11 by way of example. If the operator did not designate the desired final division planes in step S9, the final constituent layers determined in step S7 would include final constituent layers whose cross sectional surface areas gradually change and whose thickness values are equal to the predetermined thickness pitch. If this way of determination of the final division planes is not desired by the operator, the operator designates the appropriate provisional division planes that should be ignored in determining the final constituent layers. In the example of Fig. 11, the two provisional division planes indicated by arrows are ignored so that only two final constituent layers correspond to the thickness portion of the pattern 306 whose cross sectional surface area gradually changes. Thus, step S9 permits the operator to revise the final division planes or constituent layers as automatically determined by the data processing apparatus 10.

Step S9 is followed by steps S7 and S8 so that the thickness values of the final constituent layers as designated by the operator are determined.

### (3) Automatic Cutting Line Determining Sub-Step SS3

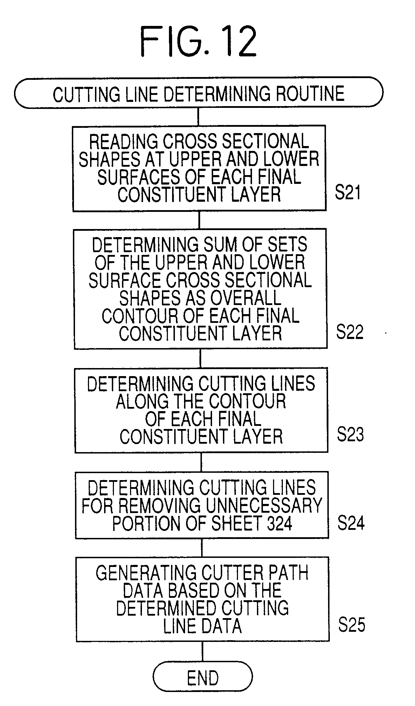

In this automatic cutting line determining sub-step SS3, the cutting line determining routine illustrated in the flow chart of Fig. 12 is executed to determine the cutting lines along which cuts are provided in each sheet 324 corresponding to each final constituent layer determined in the routine of Fig. 8. The program for executing this routine is also stored in the ROM 16.

The cutting line determining routine of Fig. 12 will be described, by reference to Fig. 5 in which the third and fourth views as counted from the top are perspective views of the fourth final constituent layer of the pattern 306 as indicated at 4 in the cross section in the second view as counted from the top. These perspective views show the cutting lines 318 for forming cuts in the unnecessary portion of the final constituent layer to be finally removed (in sub-step SS16), and cuts defining the outer contour of the portion which remains in the pattern 306 fabricated.

The routine of Fig. 12 is initiated with step S21 to determine the cross sectional shapes or areas of the pattern 306 in the determined final division planes. These cross sectional areas are defined by the outer contours at the upper and lower surfaces of each final constituent layer. In the example of Fig. 5, the upper and lower surface contours of the fourth final constituent layer which corresponds to the planar portion 313 of the lower die 309 (Fig. 4) are determined. In this example, the upper and lower surface contours are identical with each other.

Then, the control flow goes to step S22 in which a sum of sets of the cross sectional shapes at the upper and lower surfaces of each final constituent layer is calculated as "overall contour" of that final constituent layer. The overall contour is identical with the upper and lower surface contours where the upper and lower surface contours are identical with each other as in the example of Fig. 5. Where the upper and lower surface contours of the final constituent layer are different from each other, the overall contour is a contour obtained by superposing the cross sectional areas or shapes at the upper and lower surfaces of the final constituent layer in question in the direction of lamination of the final constituent layers. The latter case applies to each of the two final constituent layers determined by ignoring the two provisional division planes described above with respect to the example of Fig. 11. Thus, the contours (overall contours) of the individual final constituent layers are determined in step S22.

Step S22 is followed by step S23 to determine cutting lines along the determined contour of each final constituent layer, as indicated in the third view of Fig. 5, and generate cutting line data representative of the positions of the determined cutting lines. The cutting line date are used in sub-step SS14 indicated in Fig. 6 during fabrication of the pattern 306, to form cuts in the sheet 324 corresponding to each final constituent layer.

Then, step S24 is implemented to determine cutting lines in the form of a lattice for forming cuts in the unnecessary portion of the final constituent layer which is finally removed in sub-step SS16. These cutting lines, which are also indicated in the third view of Fig. 5, are provided to facilitate the removal of the unnecessary portion by the worker. Cutting line data representative of the positions of these cutting lines are also generated.

The control flow then goes to step S25 to generate cutter path data on the basis of the cutting line data generated in steps S23 and S24. The cutter path data represent paths of a cutter 104 used for cutting the sheets 324 in sub-step SS14 of Fig. 6.

### (4) Automatic Bonding Area Determining Sub-Step SS4

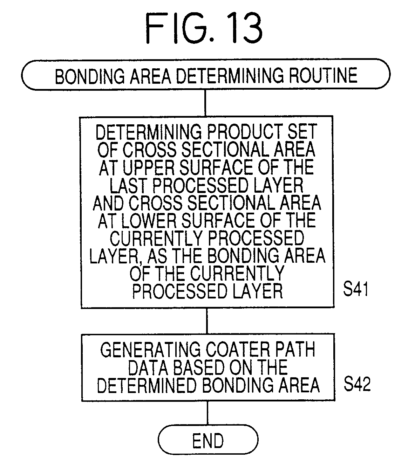

In the automatic bonding area determining sub-step SS4, a bonding area determining routine illustrated in the flow chart of Fig. 13 is executed to determine the bonding areas between the adjacent sheets 324 corresponding to the adjacent final constituent layers. A program for executing this routine is also stored in the ROM 16.

The routine of Fig. 13 is initiated with step S41 to determine the upper surface contour of the last processed final constituent layer and the lower surface contour of the currently processed final constituent layer. However, these upper and lower surface contours of the adjacent constituent layers may be replaced by the overall contours of these constituent layers. Then, a product set of the cross sectional shapes or areas at the upper and lower surfaces of the adjacent constituent layers is calculated as a bonding area 320 of the currently processed constituent layer, as indicated in the fourth view in Fig. 5. In the example of Fig. 5, the product set indicated above is the same as the cross sectional shape or area of the pattern 306 at the lower surface of the fifth final constituent layer. Thus, the thus determined bonding area 320 corresponds to a bonding area on the corresponding sheet 324, so that an adhesive is applied to only the bonding area 320 which corresponds to a portion of the sheet 324 remaining in the fabricated product 306.

Step S41 is followed by step S42 to generate coater path data representative of paths taken by a coater 110 for applying the adhesive to the bonding area of the corresponding sheet 324 which corresponds to the bonding area 320 determined in step S41.

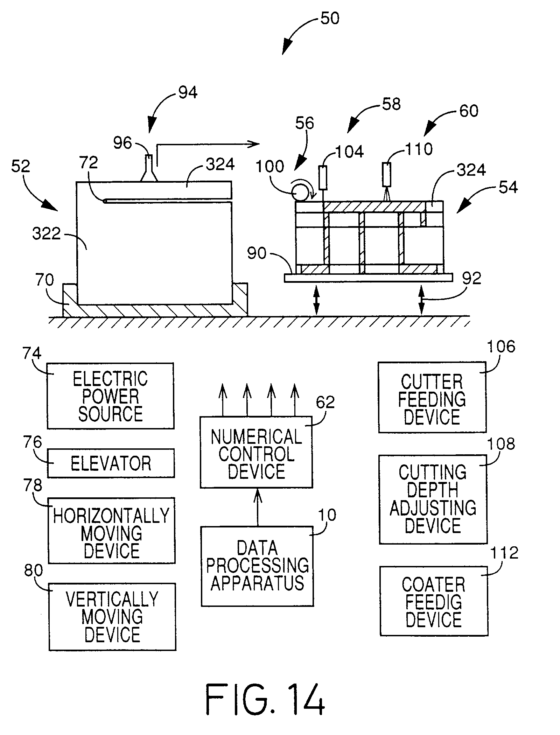

While the data processing apparatus 10 for performing the data processing step of Fig. 5 has been described, a laminating apparatus 50 for performing the laminating step of Fig. 6 will be described by reference to Fig. 14. The data processing apparatus 10 and the pattern fabricating apparatus 50 cooperate to constitute one embodiment of a fabricating apparatus for fabricating a product in the form of the pattern 306.

As shown in Fig. 14, the laminating apparatus 50 includes a blank slicing device 52, a laminating device 54, a pressure bonding device 56, a cutting device 58, an adhesive coating device 60 and a numerical control device 62. Fig. 14 also shows an intermediate laminar structure consisting of four sheets 324 in the process of fabrication of the pattern 306 for the lower die 309.

The block slicing device 52 includes a holder 70 for holding the blank 322 to be sliced, a cutter in the form of the above-indicated thermal cutting wire 72 which extends along a straight line perpendicular to the plane of Fig. 14, and an electric power source 74 for energizing the thermal cutting wire 72. The holder 70 is vertically movable by an elevator 76 so as to vertically position the blank 322 so that the top surface of the blank 322 is held at a predetermined height position.

The block slicing device 52 further includes a horizontally moving device 78 for moving the thermal cutting wire 72 relative to the blank 322 in the horizontal plane, and a vertically moving device 80 for moving the thermal cutting wire 72 relative to the blank 322 in the vertical plane. To slice the blank 322 to obtain the sheet 324 having a predetermined thickness (corresponding to the thickness value of the corresponding final constituent layer, which is determined in step S8), the thermal cutting wire 72 is vertically positioned relative to the blank 322 by the vertically moving device 80, depending upon the thickness of the sheet 324, and the wire 72 is horizontally moved relative to the blank 322 by the horizontally moving device 78 so as to cut the blank 322 in a plane parallel to the top surface.

The blank 322 is formed of foamed polystyrene, so that the blank 322 is locally fused or melted by heat generated by the thermal cutting wire 72, along the path taken by the wire 72. The block slicing device 52 receives from the data processing apparatus 10 the layer thickness data obtained by execution of the routine of Fig. 8, so that the vertically moving device 80 is controlled based on the thickness of the final constituent layer in question, which represents the thickness of the corresponding sheet 324 to be produced by slicing of the blank 322.

In the present embodiment, the blank slicing device 52 serves as a sheet supply device for supplying the sheet 324 which are superposed on each other by the laminating device 54 to form a laminar structure (e.g., pattern 306).

The laminating device 54 includes a table 90 on which the laminar structure is placed, an elevator 92 for vertically moving the table 90, and a conveyor device 94 for conveying the sheet 324. The elevator 92 is operated to change the vertical position of the table 90 so that the top surface of the intermediate laminar structure is located at a predetermined height position. The conveyor device 94 includes a holder in the form of a sucker 96 for holding the sheet 324 which is produced by the blank slicing device 52, and suitable means for moving the sucker 96 from the the position of the blank 322 to a predetermined a position above the table 90. At the predetermined position, the sucker 96 releases the sheet 324 so as to place it on the top sheet 324 of the intermediate laminar structure on the table 90.

The pressure bonding device 56 has a presser member in the form of a presser roll 100 which is adapted to press the last placed sheet 324 against the top sheet 324 of the intermediate laminar structure, so that these sheets 324 are firmly bonded together by the adhesive which has been applied to the bonding area on the upper surface of the above-indicated top sheet 324. The presser roll 100 rolls on the upper surface of the last place sheet 324 while applying a pressing force thereto in the downward direction, so that the last placed sheet 324 is evenly pressed over its entire surface area.

The cutting device 58 includes the above-indicated cutter 104, a cutter feeding device 106, and a cutting depth adjusting device 108.

The cutter 104 is adapted to cut the last placed sheet 324 at right angles to the upper surface. In the present embodiment, the cutter 104 is a laser generator adapted to generate a laser such as CO₂ laser. The cutting by laser does not cause a force to act on the sheet 324 during the cutting, thereby protecting the sheet 324 against deformation due to the cutting action, leading to improved cutting accuracy.

The cutter feeding device 106 is adapted to feed the cutter 104 and the last placed sheet 324 relative to each other in the horizontal direction, according to the cutter path data received from the data processing apparatus 10, so that cuts are formed in the sheet 324 along the cutting lines represented by the cutter path data. In the present embodiment, the cutter feeding device 106 is adapted to feed only the cutter 104 relative to the stationary laminar structure on the table 90. However, only the table 90 may be moved relative to the stationary cutter 104, or both the cutter 104 and the table 90 may be moved relative to each other.

The cutting depth adjusting device 108 is adapted to adjust the depth of the cuts formed by the cutter 104 in the last placed sheet 324, according to the layer thickness data received from the data processing apparatus 10. Usually, the depth of cut by the cutter 104 is adjusted to be equal to the thickness value of the last placed sheet 324, so that the cuts formed in this last placed sheet 324 do not reach the sheet 324 underlying the last placed sheet 324. The cutting depth adjusting device 108 may be arranged to control the output of the laser, the rate of feeding of the cutter 104 (relative to the sheet 324), or the vertical distance between the cutter 104 and the upper surface of the last placed sheet 324.

The adhesive coating device 60 includes a coater 110 and a coater feeding device 112. The coater feeding device 112 is adapted to feed the coater 110 and the last placed sheet 324 relative to each other in the horizontal direction, according to the coater path data received from the data processing apparatus 10, so that the adhesive is applied to the bonding area on the last placed sheet 324. In the present embodiment, the coater feeding device 112 is adapted to feed only the coater 110 relative to the stationary laminar structure.

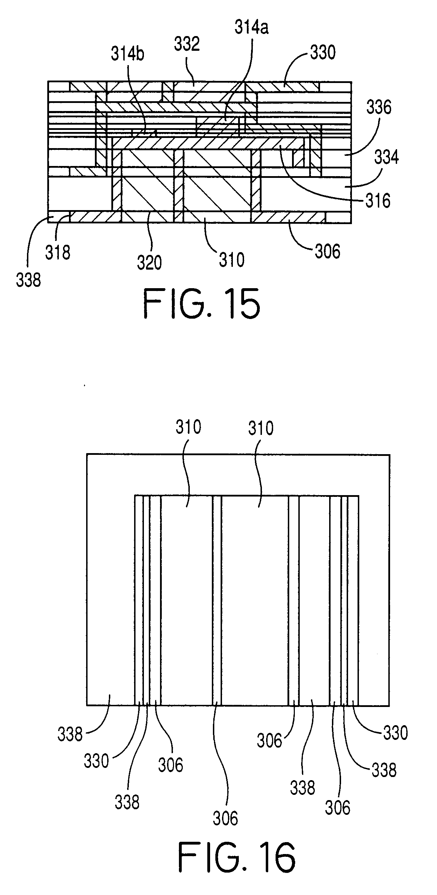

The data processing apparatus 10 and the laminating apparatus 50 have been described in connection a product in the form of the pattern 306 for casting the lower die 309 of Fig. 4 for illustrative purpose only. Where the patterns for the upper and lower dies and the reinforcing members for these patterns are concurrently fabricated, a laminar structure formed by lamination of sheets includes portions which give these four parts and unnecessary portions to be subsequently removed, as shown in Fig. 15 wherein reference numerals 330 and 332 denote the pattern for the upper die and the reinforcing member for this pattern, respectively, and reference numerals 334 and 336 denote a second sheet and a fourth sheet as counted from the bottom of the laminar structure. Reference numeral 338 denotes the unnecessary portion to be removed. Fig. 16 is a plan view of the fourth sheet 336 as seen toward its upper surface. The unnecessary portions 338 are defined by the cutting lines which also define the contours of the portions which give the patterns 306, 330.

In the above embodiment, the block slicing device 52 as the sheet supply device for supplying the sheets 324 is adapted to cut the blank 332 in a horizontal plane by changing the vertical relative position of the cutter 104 and the blank 332 by means of the vertically moving device 80, so as to adjust the thickness of the sheet 324 to be prepared. However, the thickness of the sheet 324 may be adjusted by other arrangement.

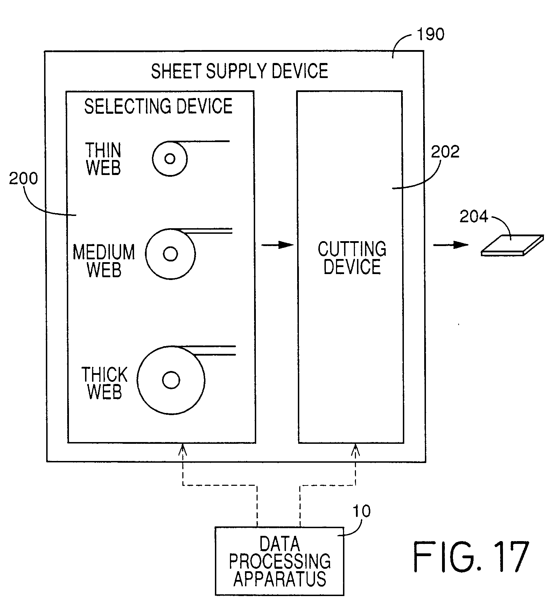

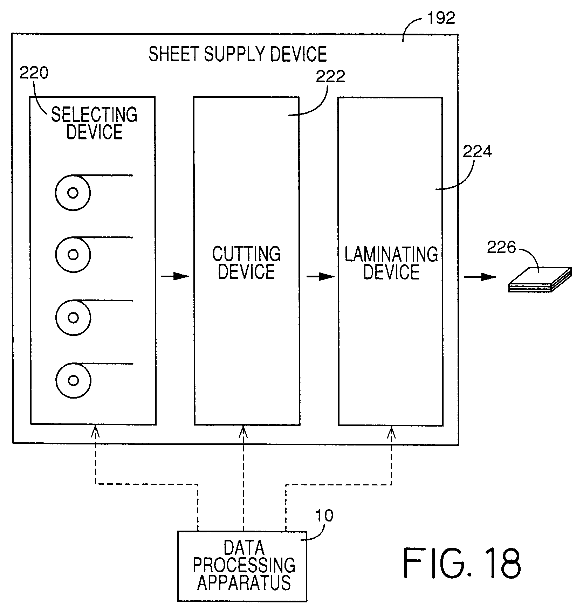

For example, the blank slicing device 52 may be replaced by a sheet supply device 190 shown in Fig. 17, or a sheet supply device 192 shown in Fig. 18. In the sheet supply device 190 of Fig. 17, a plurality of webs having different thickness values are prepared, and an appropriate one of these webs is selected according to the layer thickness data received from the data processing apparatus 10. Described more specifically, the sheet supply device 190 uses three rolls of webs having different thickness values, and includes a selecting device 200 adapted to select one of the three rolls according to the layer thickness data, and a cutting device 202 for cutting the web of the selected roll to prepare a cut sheet 204 having the appropriate thickness.

The sheet supply device 192 of Fig. 18 is adapted to obtain a laminar sheet 226 having the appropriate thickness, by laminating a plurality of sheets having the same thickness. The number of these sheets to be laminated on each other to produce the laminar sheet 226 is determined according to the layer thickness data received from the data processing apparatus 10. Described more particularly, the sheet supply device 192 uses four rolls of webs having the same thickness, and includes a selecting device 220 adapted to select the number of the rolls whose web or webs is/are used to produce the laminar sheet 226. The selecting device 220 is operated according to the layer thickness data received from the apparatus 10. The sheet supply device 192 further includes a cutting device 222 for cutting the web or webs of the selected roll or rolls to prepare at least one cut sheet, and a laminating device 224 which is operated when the two or more cuts sheets are received from the cutting device 222. The laminating device 224 is arranged to laminate the cut sheets to produce the laminar sheet 226 having the appropriate thickness. Where only one cut sheet is supplied form the cutting device 222, this cut sheet is merely passed through the laminating device 224, and supplied as the sheet 226 to be used for forming a laminar structure.

In the illustrated embodiment, the data processing and the lamination of the sheets are automated to a maximum extent, with the respective data processing and laminating apparatuses 10, 50 being automatically controlled, with a minimum requirement for manipulation by the operator, whereby the work load on the operator is significantly reduced, leading to a reduced risk of erroneous operations by the operator.

If the data processing and lamination steps of the fabricating process for fabricating a product such as the pattern 306 were not fully automated and when an operator who is not a designer of the product should deal with the product data by reading the drawings of the product, some restrictions would be imposed on the designer in designing the product, in order to avoid erroneous reading or understanding of the product drawings by the operator.

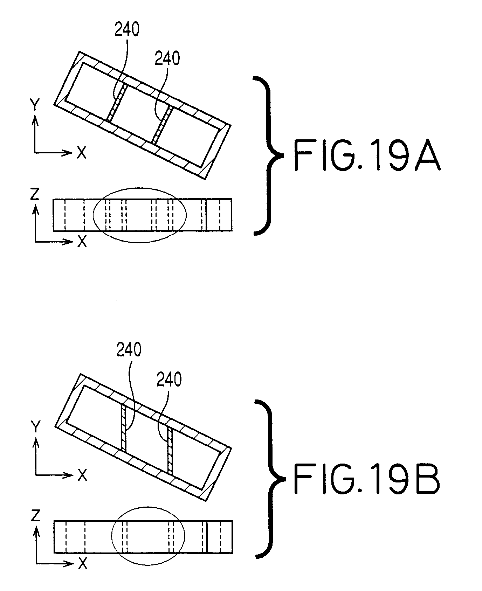

Such restrictions in designing a product may arise where reinforcing ribs are disposed in a hollow portion of a product, which hollow portion having a constant cross sectional shape. Fig. 19A shows a product having a hollow portion having a rectangular cross sectional shape as seen in the X-Y plane of the XYZ coordinate system. In this case, it is desirable to reinforce the product by two parallel ribs 240 extending through the hollow portion such that the ribs 240 are parallel to the short sides of the rectangle of the cross sectional shape. The product is not always positioned such that the long and short sides of the rectangle are parallel to the X and Y axes. The product may be positioned with the rectangle being inclined at a certain angle with respect to the X and Y axis, as indicated in the upper view of Fig. 19A. This situation may arise on a die used for a press. If the product positioned as described above is seen in the X-Z plane, the reader of the product drawing in the X-Z plane may erroneously recognize the two ribs 240 as four ribs, since the two ends of each of the two ribs 240 appear on the drawing, as indicated in an enclosed area of the lower view in Fig. 19A. The above erroneous recognition may be avoided if the product is designed such that two ribs 240 of the product positioned as intended are parallel to the X or Y axis, as indicated in the upper view of Fig. 19B, so that the two ribs 240 are correctly recognized by the reader of the drawing in the X-Z plane. In this case, the ribs 240 are inclined relative to the short and long sides of the rectangle of the cross section of the hollow portion of the product. This inclination of the ribs 240 is a restriction imposed on the designer in order to avoid erroneous reading of the product drawing. This restriction reduces intended effects of the ribs 240 to increase the strength and rigidity of the product. In other words, the strength and rigidity of the product are sacrificed for preventing the erroneous reading of the drawing of the product by the reader.

In the illustrated embodiments of the invention, the data processing for fabricating the product by lamination of sheets is substantially entirely automated, with reduced opportunity of operator's manipulation in processing the product data. Namely, the illustrated embodiments are effective to reduce the requirement of operator's reading of the product drawings, and is effective to minimize the restrictions imposed on the product designers, which would sacrifice the intended qualities of the products such as the intended strength and rigidity provided by the ribs as described above. Thus, the illustrated embodiments assure optimum designing of the products.

In the illustrated embodiments, the cutter 104 for cutting the sheets 324 so as to define the outer profile of the laminar structure (pattern 306) is oriented such that the direction of cut is always perpendicular to the surface of each sheet 324. Where the cross sectional areas or shapes at the upper and lower surfaces of a given final constituent layer are different from each other, the sum of sets of the upper and lower surface cross sectional areas is determined as the overall contour of that constituent layer along which the corresponding sheet 324 is cut by the cutter 104. If the direction of cut by the cutter 104 is variable with respect to the surface of the sheet 324, it is not essential to cut the sheet along the overall contour, and the sheet can be cut at different positions at the upper and lower surfaces where the cross sectional areas are different at the upper and lower surfaces. In this case, the laminar structure has improved dimensional or configurational accuracy, and the requirement for subsequent machining operations to correct the laminar structure into the intended product is accordingly reduced.

It will be understood that the sheets to be superposed on each other form a laminar structure may have different thickness values and are bonded together only at the bonding areas within the portions of the sheets which give the final product. The latter local bonding feature permits easier removal of the unnecessary portions which are not bonded together. The local bonding feature is available without the variable thickness feature of the sheets (constituent layers), and is therefore employed in the conventional lamination process in which all of the sheets or constituent layers have the same thickness.

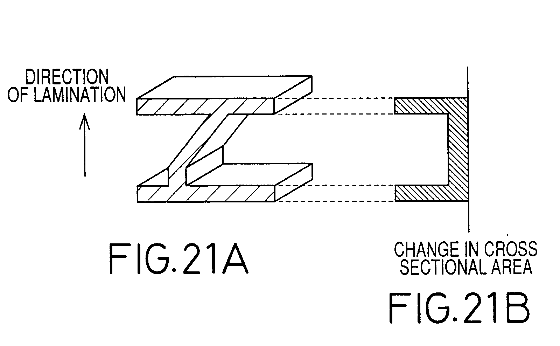

In the illustrated embodiments, the operator participates in the determination of the final division planes or constituent layers in steps S6 and S9, as described above, because a portion of the product which has the same cross sectional area in the direction of lamination of the constituent layers should not necessarily be determined as a final constituent layer (sheet 324). While the portion indicated at 2 in Fig. 10C of the pattern 306 should be treated as a constituent layer or sheet, an intermediate inclined constant-thickness portion of a product indicated in Fig. 21A should not be treated or determined as a final constituent layer even though that portion has the same cross sectional area as indicated in Fig. 21B. Namely, the final division planes or constituent layers of the product cannot be correctly determined by simply depending upon whether the provisional constituent layers each having the predetermined thickness pitch have the same cross sectional area or not.

In this respect, the data processing apparatus 10 may be provided with suitable means for controlling the display 24 so as to indicate constant-thickness portions of a product which are inclined with respect to the direction of lamination. This indication of the inclined constant-thickness portions on the display 24 aids the operator to correctly determine the final division planes or constituent layers. In the illustrated embodiments and this modified embodiment, the division of the product into the final constituent layers is not fully automated, but is effected with the aid of the operator.

However, the division of the product or the determination of the final division planes may be fully automated. For instance, the final division planes may be fully automatically determined for a portion of the product having the same cross sectional area. In this case, the center positions of the cross sectional areas of the provisional constituent layers defined by the provisional division planes corresponding to the above-indicated portion are calculated, and the provisional division planes are determined as the final division planes if the centers of the corresponding cross sectional areas do not lie on a straight line parallel to the direction of lamination of the constituent layers. The center positions of the cross sectional areas of the provisional constituent layers may be replaced by the contours of the cross sectional areas. In this case, the provisional division planes are determined as the final division planes if the contours do not line on the above-indicated straight line. In the above cases, however, it is desirable that the display 24 indicate all of the provisional division planes which are to be determined as the final division planes, and prompts the operator to accept or deny these final division planes.

While the presently preferred embodiments of this invention invention and some modifications thereof have been described above in detail by reference to the accompanying drawings, it is to be understood that the present invention may be embodied with various other changes, modifications and improvements, which may occur to those skilled in the art, without departing from the spirit and scope of the invention defined in the following claims:
Method and apparatus (10) for conceptually dividing a product (306, 310, 330, 332) into a plurality of constituent layers to fabricate the product by lamination of sheets (324, 204, 226) corresponding to the constituent layers, wherein a thickness and a shape of each constituent layer are determined so as to permit the adjacent constituent layers to have different thickness values. The method and apparatus are suitably used as part of method and apparatus (10, 50) for fabricating the product by lamination and bonding of the sheets.

## Claims

1. A method of conceptually dividing a product (306, 310, 330, 332) into a plurality of constituent layers to fabricate said product by lamination of sheets (324, 204, 226) corresponding to said constituent layers, wherein a thickness and a shape of each of said constituent layers are determined so as to permit adjacent ones of said constituent layers to have different thickness values.

2. A method according to claim 1, comprising a step of determining said thickness values of said constituent layers such that the adjacent constituent layers have different shapes.

3. A method according to claim 2, wherein said step of determining said thickness values of said constituent layers comprises:
(a) determining a plurality of parallel provisional division planes which are perpendicular to a direction of lamination of said sheets and which are spaced apart from each other at a predetermined pitch in said direction of lamination, said provisional division planes defining a plurality of provisional constituent layers;
(b) calculating cross sectional areas of said product in said provisional division planes;
(c) determining as a final division plane one of adjacent ones of said provisional division planes which correspond to a position at which the calculated cross sectional areas change in said direction of lamination; and
(d) determining the thickness of each final constituent layer defined by the final division planes, on the basis of a distance between adjacent ones of said final division planes in said direction of lamination.

4. A method of fabricating a product (306, 310, 330, 332), comprising a method of conceptually dividing said product into a plurality of constituent layers according to any one of claims 1-3, and further comprising:
preparing said sheets (324, 204, 226) whose thickness values are substantially equal to those of said plurality of constituent layers, respectively;
superposing said sheets on each other to form a laminar structure on a table (90);
bonding adjacent ones of said sheets to each other each time one of said adjacent sheets is superposed on the other of said adjacent sheets;
cutting each of said sheets after bonding of said each sheet to the adjacent sheet, to form cuts (318) in said each sheet for removing an unnecessary portion (338) of said each sheet which is outside an outer contour of a corresponding one of said constituent layers, from a necessary portion (306, 310, 330) of said each sheet inside said outer contour, said outer contour being determined as said shape of said corresponding one constituent layer; and
removing said unnecessary portion of said each sheet at said cuts.

5. A method according to claim 4, wherein said unnecessary portion of said each sheet at said cuts is removed after a last one of said sheets of said laminar structure is subjected to said bonding and said cutting.

6. A method according to claim 4 or 5, wherein said step of bonding adjacent ones of said sheets comprises bonding the adjacent sheets to each other in a bonding area within said necessary portion of said each sheet.

7. A method according to any one of claims 4-6, wherein said product is a pattern (306, 330) for forming an article (300, 302, 309) by casting.

8. A method according to claim 7, wherein said sheets constituting said pattern are formed of a material which disappears upon exposure to heat transferred from a molten metal (312) introduced into a mold, so that a volume occupied by said material is filled with said molten metal, whereby said pattern is formed in said mold.

9. A method of forming an article (300, 302, 309) by casting, comprising:
fabricating a pattern (306, 330) according to a method of claim 8; and
forming said article by casting using the fabricated pattern.

10. A method of manufacturing a product, comprising:
forming an article (300, 302, 309) according to the method of claim 9; and
forming said product by using said article as part of a mold (300, 302, 309).

11. An apparatus (10) for conceptually dividing a product (306, 310, 33o, 332) into a plurality of constituent layers to fabricate said product by lamination of sheets (324, 204, 226) corresponding to said constituent layers, wherein a thickness and a shape of each of said constituent layers are determined so as to permit adjacent ones of said constituent layers to have different thickness values.

12. An apparatus according to claim 11, comprising a thickness determining device (12, SS2, S1-S9) for determining said thickness values of said constituent layers such that the adjacent constituent layers have different shape.

13. An apparatus according to claim 12, wherein said thickness determining device comprises:
(a) provisional division plane determining means (S2) for determining a plurality of parallel provisional division planes which are perpendicular to a direction of lamination of said sheets and which are spaced apart from each other at a predetermined pitch in said direction of lamination, said provisional division planes defining a plurality of provisional constituent layers;
(b) calculating means (S3, S4) for calculating cross sectional areas of said product in said provisional division planes;
(c) final division plane determining means (S5, S6, S7, S9) for determining as a final division plane each of adjacent ones of said provisional division planes which corresponds to a position at which the calculated cross sectional areas of said adjacent provisional constituent layers change in said direction of lamination; and
(d) thickness determining means (S8) for determining the thickness of each final constituent layer defined by the final division planes, on the basis of a distance between the adjacent ones of said final division planes in said direction of lamination.

14. An apparatus (10, 50) for fabricating a product (306, 310, 330, 332), comprising an apparatus (10) for conceptually dividing said product into a plurality of constituent layers according to any one of claims 11-13, and further comprising:
a sheet supply device (52, 94) for preparing said sheets (324, 204, 226) whose thickness values are substantially equal to those of said plurality of constituent layers, respectively;
a laminating device (54) for superposing said sheets on each other to form a laminar structure on a table (90);
a bonding device (56, 60) for bonding adjacent ones of said sheets to each other each time one of said adjacent sheets is superposed on the other of said adjacent sheets; and
a cutting device (58) for cutting each of said sheets after bonding of said each sheet to the adjacent sheet, to form cuts (318) in said each sheet for removing an unnecessary portion (338) of said each sheet which is outside a contour of a corresponding one of said constituent layers, from a necessary portion (306, 310, 330) of said each sheet inside said contour, said contour being determined as said shape of said corresponding one constituent layer.

15. An apparatus for preparing a sheet (324) having a predetermined thickness, comprising:
a holder (70) for holding a blank (322);
a cutting tool (72) for cutting said blank held by said holder;
a first moving device (78) for moving said holder and said cutting tool relative to each other in a first plane, to provide a cut through said blank by said cutting tool in a plane parallel to said first plane, for removing a portion of said blank as said sheet; and
a second moving device (80) for moving said holder and said cutting tool relative to each other in a second plane intersecting said first plane, to change a position of the plane of said cut for adjust a thickness of said sheet.

16. A method of conceptually dividing a product (306, 310, 330, 332) into a plurality of constituent layers to fabricate said product by lamination of sheets (324, 204, 226) corresponding to said constituent layers, wherein said product consists of a combination of parts (306, 310, 330, 332) which are disposed relative to each other in a predetermined positional relationship with each other when said product is conceptually divided into said plurality of constituent layers, and wherein a thickness and a shape of each of said constituent layers are determined so as to permit adjacent ones of said constituent layers to have different thickness values.

17. A method according to claim 16, wherein said parts of said product includes patterns (306, 330) for forming dies (300, 302, 309) by casting, said dies being used for forming an article.

18. A method of fabricating a product (306, 310, 330, 332), comprising a method of conceptually dividing said product into a plurality of constituent layers according to claim 17, and further comprising a step of superposing said sheets (324, 204, 226) on each other to form a laminar structure which gives said patterns, and wherein said patterns cooperate with a mass of sand (308) to form a mold for forming said dies.
